# EUROPEAN PATENT SPECIFICATION

(11) **EP 0 569 250 B1**
(45) Date of publication and mention of the grant of the patent: **07.01.1998**
(21) Application number: 93303551.1
(22) Date of filing: 07.05.1993
(51) Int. Cl.: F16H 47/02, B60K 17/28, F16H 63/30, F16D 21/04

(54) **Gear box and vehicle incorporating the gear box**
Fahrzeuggetriebe und Kraftfahrzeug mit solchem Getriebe
Boîte de vitesses et véhicule équipé d'une telle boîte de vitesses

(30) Priority: 08.05.1992 GB 9209931
(43) Date of publication of application: 10.11.1993
(73) Proprietor: DAVID BROWN SPECIAL PRODUCTS LIMITED, Huddersfield, West Yorkshire HD4 5DD (GB)
(72) Inventor: Sellors, Nicholas Mark, Dunnington, Warwickshire B49 5NY (GB)
(74) Representative: Tunstall, Christopher Stephen

(56) References cited:
- EP-A- 0 013 425
- EP-A- 0 417 283
- DE-A- 2 163 974
- DE-C- 621 167
- US-A- 4 096 932

## Description

### Description of Invention

The present invention relates to a gear box according to the preamble of claim 1 used in a selt-propelled vehicle incorporating devices which are driven from the main propulsion engine of the vehicle.

In many cases. self-propelled vehicles incorporating powered devices have been provided with auxiliary engines for driving these devices. In order to avoid the cost of an auxiliary engine and to minimise the weight of the vehicle. it has been proposed to incorporate a gear box which enables drive to be transmitted from the main propulsion engine to auxiliary devices on the vehicle.

An example of a known vehicle having a gear box for transmitting drive from a main propulsion engine of the vehicle to auxiliary devices is a road-sweeping vehicle. During a sweeping operation, the vehicle is required to be driven at very low speed along a road and rotary brushes and a Can are required to be driven. A known gear box incorporated in a road sweeping vehicle has a main input member which is coupled with a main propulsion engine in the vehicle, a main output member which is coupled with driven road wheels of the vehicle and an axially displaceable gear ring for coupling the main input member with the main output member, when the vehicle is required to be driven along roads at normal speeds and a sweeping operation is not taking place. The gear ring can be displaced along the axis of the main input member to a second position, in which the gear ring can transmit drive to an auxiliary output member. The auxiliary output member is connected with one or more hydraulic pumps which supply hydraulic fluid for driving the rotatable brushes and the fan.

When the gear ring of the known gear box is in its second position, it does not couple the main output member with the main input member. For driving the main output member at a relative low speed, there is provided an hydraulic motor and a gear train for transmitting drive from the hydraulic motor to the main output member and thence to driven road wheels of the vehicle. Hydraulic fluid under pressure is supplied to the hydraulic motor from one of the pumps associated with the auxiliary output member of the gear box. The gear train is spaced radially from the axis of the main input member and includes, for example, a relatively large diameter gear ring on the main output member.

A gear box according to the preamble of claim 1 which is able to transmit drive between main input and output members or a combination of the main and auxiliary input and output members is described in EP-A-0013425. The gear box includes a main input member, a main output member, an auxiliary output member, an auxiliary input member and coupling means for releasably coupling the main input member and the main output member with each other for rotation together. The coupling means is also able to releasably couple the main input member with the auxiliary output member and the auxiliary input member with the main output member. The coupling means consists of first and second co-axial transmission elements arranged for relative rotation and for axial movement together but in opposite directions, between respective first positions in which drive is transmitted from the main input member to the main output member and respective second positions in which drive can be transmitted from the main input member to the auxiliary output member and the auxiliary input member to the main output member.

According to a first aspect of the present invention, there is provided a gear box comprising a main input member, a main output member, auxiliary output member, an auxiliary input member and coupling means for releasably coupling the main input member with the main output member with each other for rotation together, releasably coupling the main input member with the auxiliary output member and for releasably coupling the auxiliary input member with the main output member, the coupling means comprising first and second co-axial transmission elements arranged for relative rotation for axial movement together between a first position, in which drive can be transmitted from the main input member to the main output member and a second position in which drive can be transmitted from the main input member to the auxiliary output member and also from the auxiliary input member to the main output member, characterised by a thrust bearing interposed between mutually overlapping portions of the transmission elements to enable the said relative rotation and for transmitting axial movement from one of the co-axial transmission elements to the other for simultaneous movement in the same direction.

The co-axial arrangement of the transmission elements of a gear box embodying the present invention enables the gear box to be produced at lower cost than the known gear box and facilitates a reduction in overall size and therefore in overall weight of the gear box.

According to a second aspect of the present invention, there is provided a vehicle comprising a propulsion driven wheels, at least an one auxiliary, powered device and a gear box according to the first aspect of the invention, the gear box being arranged for transmitting drive from the propulsion engine to the driven wheels only or from the propulsion engine to the auxiliary, powered device and also to the driven wheels, through the intermediary of a hydraulic pump and motor combination. Generally, the driven wheels will be ground-engaging wheels but it would be within the scope of the invention to arrange the driven wheels to run on tracks incorporated in the vehicle.

An example of a gear box embodying the first aspect of the invention will now be described, with reference to the accompanying drawing, wherein:

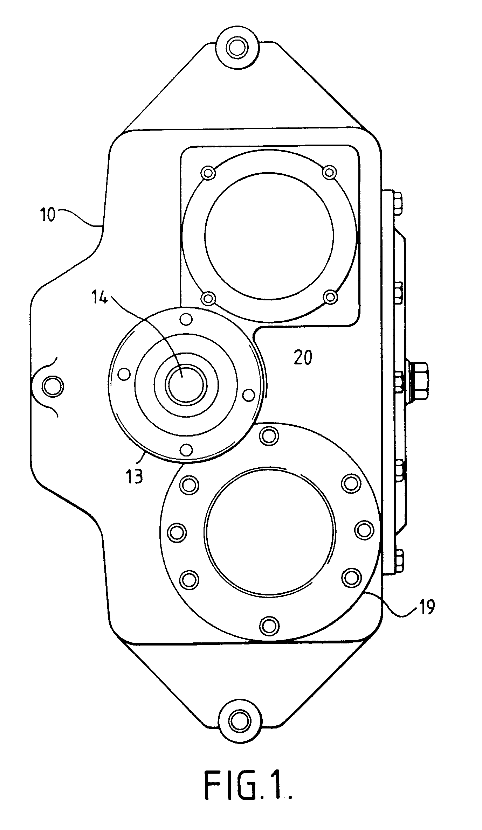

**FIGURE 1** shows an end view of the gear box and

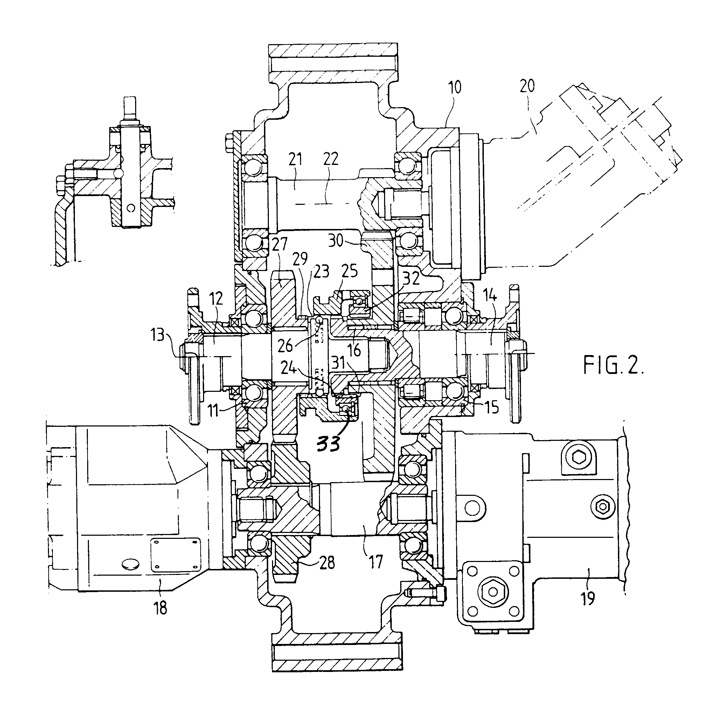

**FIGURE 2** shows a cross section through the gear box.

The gear box comprises a housing 10 in which there is fitted a hearing 11 supporting a main input member 12 for rotation about an axis 13. In the example illustrated, the main input member 12 is a shaft having a length which is similar to the corresponding dimension of the gear box and which lies partly inside the gear box and partly outside the gear box. As shown, a flange may be provided on the protruding part of the shaft 12 to facilitate coupling with a further drive shaft (not shown).

A main output member 14 is supported by a further bearing 15 for rotation relative to the housing and relative to the input shaft 12 about the axis 13. A third bearing 16 is interposed between mutually overlapping portions of the members 12 and 14 to maintain the co-axial relation of these members. The member 14 also is a shaft having a length similar to the corresponding dimension of the gear box and including a connecting flange on a protruding portion of the member 14.

An auxiliary output shaft 17 is supported in the housing 10 by a pair of spaced bearings. The shaft 17 is parallel to but is spaced from the main input shaft 12. Hydraulic pumps 18 and 19 are mounted on the outside of the housing 10 in alignment with the shaft 17 and respective rotors of these pumps are coupled with the shaft 17 to be driven thereby.

An hydraulic motor 20 is mounted on the outside of the housing 10 at a position spaced from the pumps 18 and 19 and also spaced from the main input shaft 12 and the main output shaft 14. An auxiliary input member 21 extends into the housing from the motor 20 and is supported for rotation about an axis 22 which is spaced from but parallel to the axis 13. The auxiliary input member is arranged to be turned about the axis 22 by the motor 20, when the motor is energised.

Ducts are provided for conveying hydraulic fluid from one of the pumps 18 and 19 to the motor 20, in order that the motor can be driven via one of the pumps.

A first gear ring 23 is provided on the main input shaft 12 in fixed relation thereto at a position adjacent to the main output shaft 14. A similar first gear ring 24 is provided on the main output shaft adjacent to the gear ring 23 and is fixed with respect to the shaft 14. These gear rings have the same number of teeth on the same pitch circle. A first transmission element 25 is provided for transmitting drive between the gear rings 23 and 24. This transmission element has an internal ring of gear teeth which, when the element 25 is in the first position as shown in the upper part of the drawing, are enmeshed with both the gear ring 23 and the gear ring 24. In this position, the element 25 provides direct coupling between the main input shaft 12 and the main output shaft 14 for driving the main output shaft at the same speed as the main input shaft is turned. A spring-loaded detent 26 is provided for releasably retaining the transmission element 25 in its first position.

A pinion 27 is mounted on the main input shaft 12 for rotation relative to that shaft about the axis 13. The pinion 27 has teeth which are enmeshed with teeth of a pinion 28 on the auxiliary output shaft 17. The pinion 28 is keyed to this shaft. The pinion 27 incorporates a second gear ring 29 having the same number of teeth and the same pitch circle as does the gear ring 23. The gear ring 29 is adjacent to the gear ring 23 and is co-axial therewith. The transmission element 25 can be moved axially from the first position shown in the upper part of the drawing to a second position shown in the lower part of the drawing, in which the element 25 is enmeshed with the gear ring 23 and the gear ring 29 but it not enmeshed with the gear ring 24 on the main output shaft 17. When the element 25 is in its second position, drive can be transmitted from the main input shaft 12 to the pumps 18 and 19.

A known selector mechanism (not shown) is provided for moving the transmission element 25 between its first and second positions. The selector mechanism includes a handle remote from the gear box, a selector fork inside the gear box and a linkage between the handle and the selector fork.

The gear box comprises a further Pinion 30 which is mounted on the main output shaft 14 for rotation relative to that shaft about the axis 13. At its periphery, the Pinion 30 has teeth which are enmeshed with gear teeth on the auxiliary input member 21. The Pinion 30 has near to the output shaft 14 and adjacent to the gear ring 24 thereon a second gear ring 31 comprising the same number of teeth on the same pitch circle as does the gear ring 24. A second transmission element 32 is provided for transmitting drive from the gear ring 31 to the gear ring 24. The transmission element 32 has internal teeth which, when the first transmission element 25 is in its first position, are enmeshed only with the gear ring 31. When the transmission element is moved to its second position, the transmission element 32 is moved into a second position in which its teeth are enmeshed with both the gear ring 31 and the gear ring 24. A thrust bearing 33 is provided for transmitting axially directed force between the transmission elements 25 and 32, this thrust bearing being interposed between mutually overlapping portions of the transmission elements. It will be noted that the transmission element 25 and the transmission element 32 are co-axial. The transmission element 32 lies substantially at the inside of the transmission element 25. There is no selector fork arranged to act directly on the element 32.

The gear box illustrated in the accompanying drawing is suitable for installation in a road-sweeping vehicle, in substitution for the known gear box commonly provided in such vehicles. The main input shaft 12 is coupled with a known engine, clutch and gear box unit which is typically mounted in a front portion of the vehicle. The gear box shown in the accompanying drawing is typically spaced rearwards from that main propulsion unit and connected thereto by one or more drive shafts. The main output shaft 14 is coupled with driven wheels of the vehicle, typically rear wheels of the vehicle.

Ducts are provided for connecting the pumps 18 and 19 with an hydraulic reservoir (not shown) and with hydraulic motors including the motor 20. Other hydraulic motors arranged to he driven by the pumps 18 and 19 are incorporated in auxiliary powered devices, including means for driving a fan and means for driving rotary brushes mounted in the vehicle. It will be understood that, in the case of a vehicle having other auxiliary, powered devices, the pumps would be connected with these devices. as required. Typically, one of the pumps 18 and 19 is used to drive the motor 20 alone and the other of the pumps 18 and 19 is used to drive auxiliary device.

When the vehicle is to be driven along roads to a place at which sweeping is to take place. the transmission elements 25 and 32 are set in their respective first positions so that drive is transmitted from the main input shaft 12 only to the main output shaft 14. When a sweeping operation is to begin, the transmission elements are moved to their second positions so that direct drive of the main output shaft 14 from the main input shaft 12 is terminated. With the transmission elements in the second position, drive is transmitted from the main input shaft 12 to the pumps 18 and 19. If hydraulic fluid is supplied to the motor 20, then drive will be transmitted from that motor to the main output shaft 14 to drive the vehicle along the road at a relatively low speed, for example up to 5 kilometre per hour.

## Claims

1. A gear box comprising a main input member (12), a main output member (14), an auxiliary output member (17), an auxiliary input member (21) and coupling means for releasably coupling the main input member with the main output member with each other for rotation together, releasably coupling the main input member with the auxiliary output member and for releasably coupling the auxiliary input member with the main output member, the coupling means comprising first and second co-axial transmission elements (25,32) arranged for relative rotation and for axial movement together between a first position, in which drive can be transmitted from the main input member to the main output member and a second position in which drive can be transmitted from the main input member to the auxiliary output member and also from the auxiliary input member to the main output member, characterised by a thrust bearing (33) interposed between mutually overlapping portions of the transmission elements to enable the said relative rotation and for transmitting axial movement from one of the co-axial transmission elements to the other for simultaneous movement in the same direction.

2. A gear box according to claim 1 further comprising a selector arranged for cooperation with the first co-axial transmission element (25) to displace the first transmission element along its axis between the first and second positions.

3. A gear box according to claim 2, with which there is associated a handle and a linkage for transmitting movement from the handle to the selector.

4. A gear box according to any preceding claim, comprising respective co-axial gear rings of substantially the same diameter including a first gear ring (23) provided on the main input member, a second gear ring (29) provided on the main input member, able to rotate with respect to the main input member and associated with a pinion (27) which enmeshes with a pinion (28) on the auxiliary output member, and a first gear ring (24) provided on the main output member, in which the first of the co-axial transmission elements (25) has an internal gear ring enmeshed with the gear ring of the main input member and with a selected one of the gear rings of the main output member and the auxiliary input member.

5. A gear box according to claim 4 in which the coupling means further comprises a second gearing (31) on the main output member, co-axial with, of substantially the same diameter as and adjacent to the first gear ring (23) on the main output member, able to rotate with respect to the main output member and associated with a pinion (30) which enmeshes with a pinion on the auxiliary input member, in which the second of the co-axial transmission elements (32) has an internal gear ring enmeshed with the gear ring of the auxiliary input member and, when the first transmission element is in its second position, also with the gear ring of the main output member.

6. A vehicle comprising a main propulsion engine, driven wheels and auxiliary devices (18,19) and further comprising a gear box (10) according to any preceding claim arranged for transmission either from the main propulsion engine to the driven wheels or to both the auxiliary devices and the driven wheels via an hydraulic pump and motor combination.

## Patentansprüche

1. Getriebe mit einem Haupteingangsglied (12), einem Hauptausgangsglied (14), einem Hilfsausgangsglied (17), einem Hilfseingangsglied (21) und einem Verbindungsmittel zum lösbaren Verbinden des Haupteingangsglieds mit dem Hauptausgangsglied, so daß sie sich zusammen drehen können, lösbaren Verbinden des Haupteingangsglieds mit dem Hilfsausgangsglied und zum lösbaren Verbinden des Hilfseingangsglieds mit dem Hauptausgangsglied, wobei das Verbindungsmittel ein erstes und zweites koaxiales Übertragungselement (25, 32) umfaßt, die zur relativen Drehung und axialen Bewegung zusammen zwischen einer ersten Position, in der Antrieb von dem Haupteingangsglied auf das Hauptausgangsglied übertragen werden kann, und einer zweiten Position, in der Antrieb von dem Haupteingangsglied auf das Hilfausgangsglied und auch von dem Hilfseingangsglied auf das Hauptausgangsglied übertragen werden kann, angeordnet sind, gekennzeichnet durch ein Axiallager (33), das so zwischen einander überlappenden Teilen der Übertragungselemente angeordnet ist, daß die relative Drehung und eine Übertragung der Axialbewegung von einem der koaxialen Übertragungselemente auf das andere zur gleichzeitigen Bewegung in der gleichen Richtung ermöglicht wird.

2. Getriebe nach Anspruch 1, weiterhin mit einer Wählvorrichtung, die zum Zusammenwirken mit dem ersten koaxialen Übertragungselement (25) zur Verschiebung des ersten Übertragungselements entlang seiner Achse zwischen der ersten und zweiten Position angeordnet ist.

3. Getriebe nach Anspruch 2, dem ein Griff und ein Gestänge zur Bewegungsübertragung von dem Griff auf die Wählvorrichtung zugeordnet sind.

4. Getriebe nach einem der vorhergehenden Ansprüche, mit jeweiligen koaxialen Zahnkränzen im wesentlichen gleichen Durchmessers mit einem ersten Zahnkranz (23), der an dem Haupteingangsglied vorgesehen ist, einem zweiten Zahnkranz (29), der an dem Haupteingangsglied vorgesehen ist, sich bezüglich des Haupteingangsglieds drehen kann und einem Ritzel (27) zugeordnet ist, das mit einem Ritzel (28) auf dem Hilfsausgangsglied in Eingriff steht, und einem ersten Zahnkranz (24), der an dem Hauptausgangsglied vorgesehen ist, wobei das erste der koaxialen Übertragungselemente (25) einen Innenzahnkranz aufweist, der mit dem Zahnkranz des Haupteingangsglieds und mit einem ausgewählten der Zahnkränze des Hauptausgangsglieds und des Hilfseingangsglieds in Eingriff steht.

5. Getriebe nach Anspruch 4, bei dem das Verbindungsmittel weiterhin einen zweiten Zahnkranz (31) auf dem Hauptausgangsglied umfaßt, der mit dem ersten Zahnkranz (23) auf dem Hauptausgangsglied koaxial ist, im wesentlichen den gleichen Durchmesser wie er aufweist und an ihm angrenzend angeordnet ist, sich bezüglich des Hauptausgangsglieds drehen kann und einem Ritzel (30) zugeordnet ist, das ein Ritzel auf dem Hilfseingangsglied in Eingriff nimmt, wobei das zweite der koaxialen Übertragungselemente (32) einen Innenzahnkranz aufweist, der mit dem Zahnkranz des Hilfseingangsglieds und, wenn sich das erste Übertragungselement in seiner zweiten Position befindet, auch mit dem Zahnkranz des Hauptausgangsglieds in Eingriff steht.

6. Fahrzeug mit einem Hauptantriebsmotor, angetriebenen Rädern und Hilfsvorrichtungen (18, 19) und weiterhin mit einem Getriebe (10) gemäß einem der vorherigen Ansprüche, das zur Übertragung entweder von dem Hauptantriebsmotor auf die angetriebenen Räder oder sowohl auf die Hilfsvorrichtungen als auch auf die angetriebenen Räder über eine Kombination aus Hydropumpe und -motor angeordnet ist.

## Revendications

1. Boîte de vitesses comprenant un organe d'entrée principal (12), un organe de sortie principal (14), un organe de sortie auxiliaire (17), un organe d'entrée auxiliaire (21) et un moyen d'accouplement pour coupler l'un à l'autre de manière détachable l'organe d'entrée principal et l'organe de sortie principal de sorte qu'ils tournent ensemble, pour coupler de manière détachable l'organe d'entrée principal à l'organe de sortie auxiliaire et pour coupler de manière détachable l'organe d'entrée auxiliaire à l'organe de sortie principal, le moyen d'accouplement comprenant des premier et deuxième éléments de transmission coaxiaux (25, 32) agencés en vue d'une rotation relative et d'un mouvement axial commun entre une première position, dans laquelle l'entraînement peut être transmis depuis l'organe d'entrée principal à l'organe de sortie principal, et une deuxième position dans laquelle l'entraînement peut être transmis depuis l'organe d'entrée principal à l'organe de sortie auxiliaire et également depuis l'organe d'entrée auxiliaire à l'organe de sortie principal, caractérisée par un palier de butée (33) interposé entre des portions se chevauchant mutuellement des éléments de transmission pour permettre ladite rotation relative et pour transmettre le mouvement axial depuis l'un des éléments de transmission coaxiaux à l'autre en vue d'un mouvement simultané dans la même direction.

2. Boîte de vitesses selon la revendication 1, comprenant en outre un sélecteur agencé de manière à coopérer avec le premier élément de transmission coaxial (25) pour déplacer le premier élément de transmission le long de son axe entre les première et deuxième positions.

3. Boîte de vitesses selon la revendication 2, à laquelle est associée une poignée et une liaison pour la transmission du mouvement de la poignée au sélecteur.

4. Boîte de vitesses selon l'une quelconque des revendications précédentes, comprenant des couronnes d'engrenage coaxiales respectives ayant substantiellement le même diamètre, comportant une première couronne d'engrenage (23) prévue sur l'organe d'entrée principal, une deuxième couronne d'engrenage (29) prévue sur l'organe d'entrée principal, capable de tourner par rapport à l'organe d'entrée principal et associée à un pignon (27) qui s'engrène avec un pignon (28) sur l'organe de sortie auxiliaire, et une première couronne d'engrenage (24) prévue sur l'organe de sortie principal, dans laquelle le premier des éléments de transmission coaxiaux (25) a une couronne d'engrenage interne engrenée avec la couronne d'engrenage de l'organe d'entrée principal et avec une couronne sélectionnée parmi les couronnes d'engrenage de l'organe de sortie principal et de l'organe d'entrée auxiliaire.

5. Boîte de vitesses selon la revendication 4, dans laquelle le moyen d'accouplement comprend en outre une deuxième couronne d'engrenage (31) sur l'organe de sortie principal, coaxiale à, substantiellement de même diamètre que, et adjacente à la première couronne d'engrenage (23) sur l'organe de sortie principal, capable de tourner par rapport à l'organe de sortie principal et associée à un pignon (30) qui s'engrène avec un pignon sur l'organe d'entrée auxiliaire, dans laquelle le deuxième des éléments de transmission coaxiaux (32) a une couronne d'engrenage interne engrenée avec la couronne d'engrenage de l'organe d'entrée auxiliaire et, lorsque le premier élément de transmission est dans sa deuxième position, également avec la couronne d'engrenage de l'organe de sortie principale.

6. Véhicule comprenant un moteur de propulsion principal, des roues motrices et des dispositifs auxiliaires (18, 19) et comprenant en outre une boîte de vitesses (10) selon l'une quelconque des revendications précédentes, agencée en vue de la transmission, soit depuis le moteur de propulsion principal, aux roues motrices, soit à la fois aux dispositifs auxiliaires et aux roues motrices via une combinaison de pompes hydrauliques et d'un moteur.
